# EUROPEAN PATENT APPLICATION

(11) **EP 3 309 893 A1**
(43) Date of publication of application: **18.04.2018**
(21) Application number: 17196091.7
(22) Date of filing: 12.10.2017
(51) Int. Cl.: H01M 10/42, H01M 10/04, H01M 10/0585

(54) **LOGICAL BATTERY**

(30) Priority: 13.10.2016 TW 105133017
(71) Applicant: Prologium Technology Co., Ltd., Taoyuan City 320 (TW); Prologium Holding Inc., Grand Cayman, KY1-1104 (KY)
(72) Inventor: YANG, Szu-Nan, Taoyuan City 320 (TW)
(74) Representative: Cabinet Chaillot

(57) **Abstract**

A logical battery is disclosed in the present invention. The logical battery includes a composite substrate, a second current collecting layer, a sealing frame and an electro-chemical layer. The composite substrate includes a first current collecting layer and a layout layer. The sealing frame is disposed between the first and second current collecting layers. At least part of the sealing frame is overlapping with the first and second current collecting layers orthographically. A sealed space is formed via the sealing frame, the first current colleting layer and the second current collecting layer for placing the electro-chemical layer. A battery unit is formed via the first current collecting layer, the second current collecting layer, the sealing frame and the electro-chemical layer.

## Description

### BACKGROUND

### 1. Technical Field

The present invention is related to a battery, especially related to a logical battery which integrates with circuit and electronic module.

### 2. Description of Related Art

Recently, the electronic devices are becoming lighter and thinner. However, as the functions become more diverse, the performance requirements are increased. So the specifications of the batteries such as capacity, safety, become relatively harsh. In recent smartphone, there is a battery inside for providing electricity for the electronic modules, such as monitor, processor speaker, and antenna. The electronic modules and the battery are electrically connected via a circuit board, so that the electric power can transmit to the electronic modules from the battery. The recent smartphones have multiple functions such as calling, internet surfing, photography, also, the resolution of monitor and the speed of data processing or transmitting are improved. However, because the inner space of the smartphone is reduced, the design of the electronic modules as well as the battery should become thinner.

Unfortunately, the thickness and the capacity of battery, are in positive incidence. Especially in winding battery, once the thickness of the battery reduces, the length of the electrode is reduced, the capacity of the battery is bound to reduce relatively.

Accordingly, a logical battery is provided to overcome the above problems.

### SUMMARY OF THE INVENTION

It is an objective of this invention to provide a logical battery. The composite substrate of the logical battery comprises a current collecting layer and a layout layer which can electrically connect to electronic modules. The battery and the electronic modules are integrated, and the whole thickness of the logical battery is reduced.

It is an objective of this invention to provide a logical battery. The composite substrate can also be the current collecting layer of the battery. The electro-chemical layer can electrically connect to the composite substrate without disposing external connection part. The processing and the circuit design can be simplified.

It is another objective of this invention to provide a logical battery. The composite substrate is part of the package of the logical battery, isolating the electro-chemical system from outside environment and blocking water and gas outside.

The present invention provides a logical battery comprising a composite substrate, a second current collecting layer, a sealing frame and an electro-chemical system. The composite substrate comprises a first current collecting layer and a layout layer which disposed on the peripheral of the first current collecting layer, and a sealing frame, disposed between the first current collecting layer and the second current collecting layer. A sealed space is formed via the sealing frame, the first current collecting layer and the second current collecting layer. An electro-chemical layer is disposed in the sealed space. A battery unit is formed via the first current collecting layer, the second current collecting layer, the sealing frame and the electro-chemical layer. The electro-chemical layer comprises a first active material layer, a second active material layer and an isolation layer which disposed between the first active material layer and the second active material layer, the first active material layer contacts with the first current collecting layer, the second active material layer contacts with the second current collecting layer.

Further scope of applicability of the present invention will become apparent from the detailed description given hereinafter.

### BRIEF DESCRIPTION OF THE DRAWINGS

Fig.1 illustrates a structure of logical battery of this present invention.
Fig.2 illustrates a structure of logical battery of this present invention.
Fig.3 illustrates a structure of logical battery of this present invention.
Fig.4 illustrates a structure of logical battery of this present invention.
Fig.5 illustrates a structure of logical battery of this present invention.
Fig.6 illustrates a structure of logical battery of this present invention.
Fig.7 illustrates a structure of logical battery of this present invention.
Fig.8 is a section view of Fig.7.
Fig.9 illustrates the logical battery having antenna unit which applied in a smart card.
Fig.10A and Fig.10B are the illustration of positive and negative surface of logical battery which applied in smart card.

### DETAILED DESCRIPTION

The present invention provides a logical battery and its whole thickness is decreased. The electronic modules and the current collecting layer are integrated in a composite substrate of the logical battery. The electronic modules can directly connect to the battery without circuit board.

Some embodiments are described below so as to illustrate the technical features of this invention more clearly.

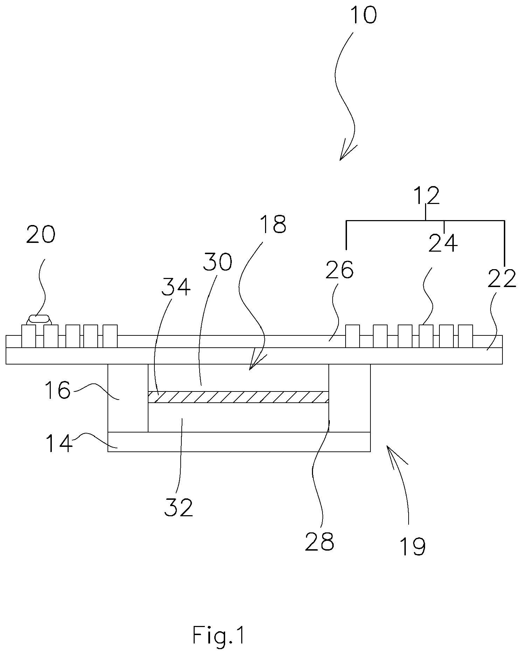

Please refer to Fig.1, Fig.1 illustrates an embodiment of the present invention. As figure, the logical battery 10 comprises a composite substrate 12, a second current collecting layer 14, a sealing frame 16, an electro-chemical layer 18 and an electrical module 20. The composite layer 12 comprises a first current collecting layer 22, a layout layer 24 and an insulating material layer 26. The insulating material layer 26 covers the surface of the first current collecting layer 22 which is not covered by the layout layer 24. The layout layer 24 is a patterned metal layer. The patterned metal layer can electrically connect to the electrical module 20. The first current collecting layer 22, the second current collecting layer 14, the sealing frame 16 and the electro-chemical layer form a battery unit 19. The electrical module 20 is selected from circuit, electrical modules and the combination thereof. The composite substrate 12 can be flexible print circuit. The composite substrate 12 provides the current collecting layer of the battery unit 19 and the layout layer, combines the battery unit and the electronic modules, so the whole thickness of electronic modules is decreased. The antenna unit, battery unit and other electronic modules can be integrated through modularized design of the present logical battery, the complexity of developing electronic devices (e.g. smart card) can be reduced.

The sealing frame 16 is disposed between the first current collecting layer 22 and the second current collecting layer 14, the top surface of the sealing frame 16 adheres to the first current collecting layer 22, the bottom surface of the sealing frame 16 adheres to the second current collecting layer 14. An enclosed sealed space 28 is formed, accommodates the electro-chemical layer 18. A battery unit 19 is formed via the first current collecting layer 22, the second current collecting layer 14, the sealing frame 16 and the electro-chemical layer 18. The electro-chemical layer 18 comprises a first active material layer 30, the second active material layer 32, an isolation layer 34 which disposed between the first active material layer 30 and the second active material layer 32, and an electrolyte (not shown in figure) which dispersed in the first active material layer 30, the second active material layer 32 and the isolation layer 34. The first active material layer 30 is formed inside the sealed space 28 via coating, and the first active material layer 30 contacts with the first current collecting layer 22, electrically contacts with the composite layer 12. The second active material layer 32 is formed inside the sealed space 28 via coating, and the second active material layer 32 contacts with the second current collecting layer 14, electrically contacts with the second current collecting layer 14.

The top surface of the sealing frame 16 adheres to the first current collecting layer 22, the bottom surface of the sealing frame 16 adheres to the second current collecting layer 14, and the electro-chemical layer 18 is completely in the orthographical area of the first current collecting layer 22 and/or the second current collecting layer 14. That is, the sealing frame 16 is also in the orthographical area of the first current collecting layer 22 and/or the second current collecting layer 14. The orthographical area of the first active material layer 30 is smaller than the orthographical area of the first current collecting layer 22, the orthographical area of the second active material layer 32 is smaller than the orthographical area of the second current collecting layer 14. According to the above structure, the electro-chemical layer 18 is sealed via the sealing frame 16, the first current collecting layer 22 and the second current collecting layer 14.

Furthermore, the sealing frame 16 can completely or partly in the orthographical area of the first current collecting layer 22 and the second current collecting layer 14. That is, when the first current collecting layer 32 and the second current collecting layer 14 have same length in cross section, the sealing frame 16 is completely in the orthographical area of the first current collecting layer 22 and the second current collecting layer 14, when the first current collecting layer 32 and the second current collecting layer 14 have different length in cross section, the sealing frame 16 is completely in the orthographical area of the first current collecting layer 22 or the second current collecting layer 14, when the sealing frame 16 is partly in the orthographical area of the first current collecting layer 22 and the second current collecting layer 14, a part of the sealing frame 16 is out of the orthographical area of the first current collecting layer 22 and the second current collecting layer 14 no matter the length difference between the first current collecting layer 22 and the second current collecting layer 14.

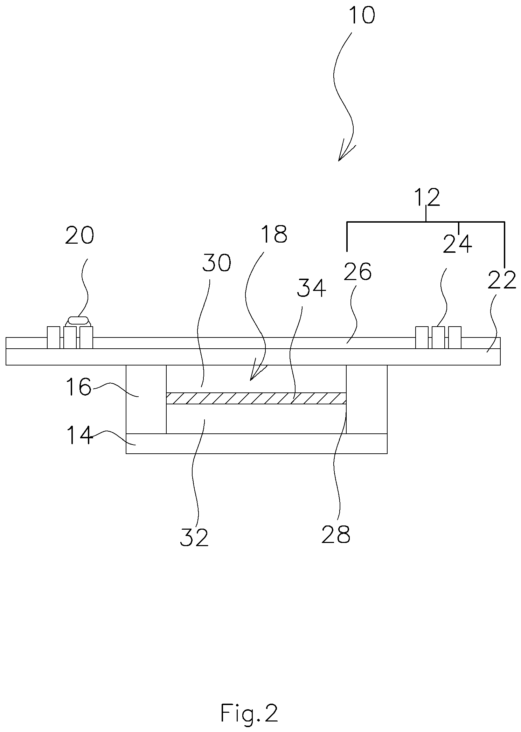

Moreover, in this embodiment, the layout layer 24 is on one of the first current collecting layer 22. Orthographically, the layout layer 24 and the battery unit 19 are at least partially overlapping. In Fig.2, to prevent disturbing of electromagnetic wave, the layout layer 24 and the battery unit 19 are non-overlapping orthographically.

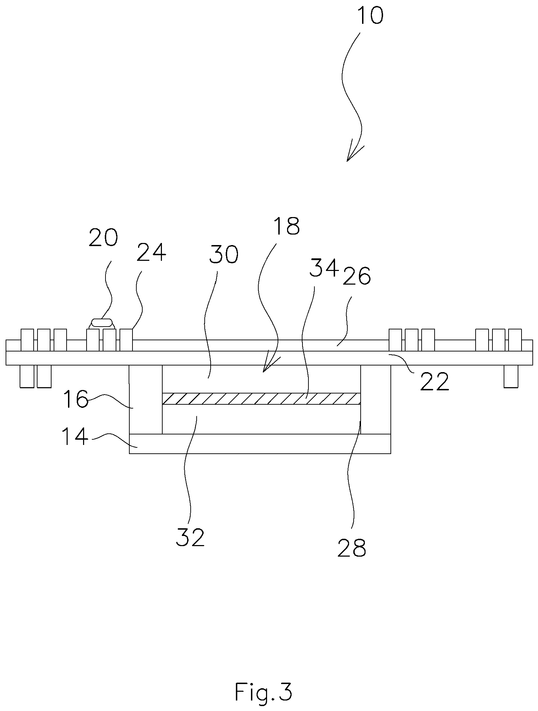

Please refer to Fig.3, Fig.3 illustrates another embodiment of the present invention. In this embodiment, the layout layer 24 is on two opposite surface of the first current collecting layer 22.

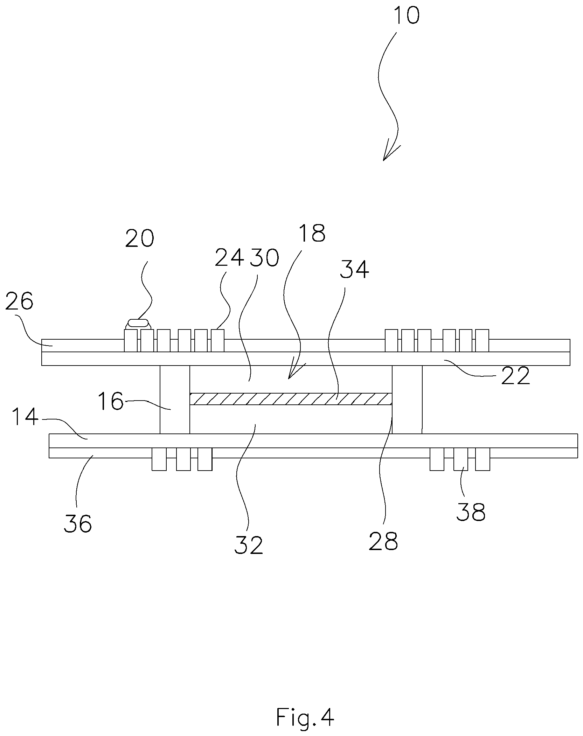

Certainly, an insulation covering layer 36 can further dispose on a surface of the second current collecting layer 14 which does not contact with the second active material layer 32. A patterned metal layer 38 is further disposed on a side of the insulation covering layer 36 which does not contact with the second current collecting layer 14 for circuit layout and/or current collecting of other layout layer, as shown in Fig.4. The second current collecting layer 14 and the patterned metal layer 38 can be integrated into the composite layer as above mention.

The isolation layer 34 is selected from the materials of nanoscale and microscale TiO2, A12O3, SiO2, or alkylation ceramic particles, and the materials are bonded by polymers such as Polyvinylidene fluoride(PVDF), PVDF-HFP, Polytetrafluoroethene(PTFE), Acrylic Acid Glue, Epoxy, PEO, PAN, PI. The isolation layer 34 can be ionic conduction during electro-chemical reaction. The insulating material layer 26 and the insulation covering layer 36 are selected from the materials of polyimide, PET, PEN, PS, PP, PVC, PBT, PE, HDPE, LDPE, PA, Acrylic, Epoxy and glass fibers. The insulating material layer 26 and the insulation covering layer 36 can isolate the battery unit 19 from outside environment.

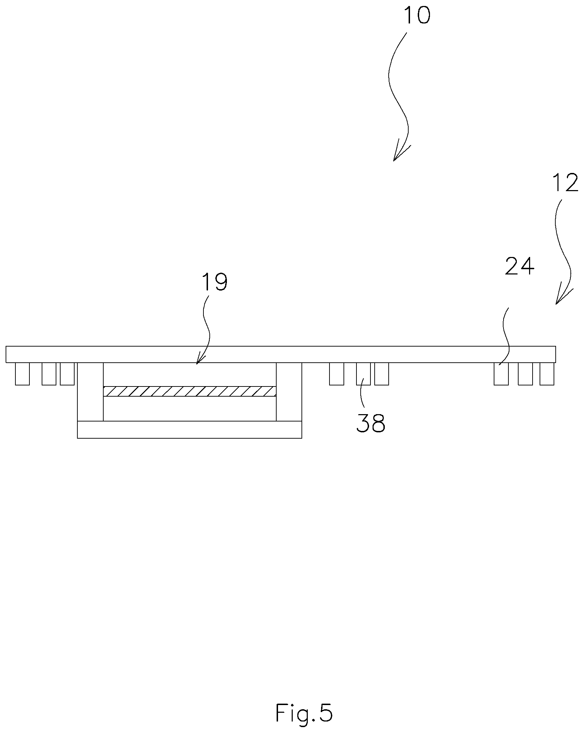

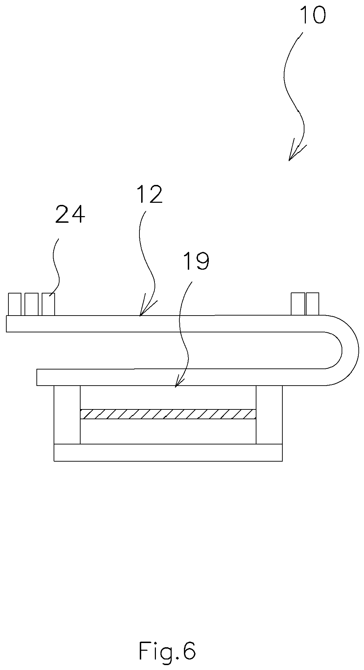

The layout layer 24 can be an antenna unit 35, and the composite substrate 12 can be hard or flexible. Please refer to Fig.5, when the composite substrate 12 is hard, the antenna unit 35 and the battery unit 19 are at least partially overlapping or non-overlapping orthographically. Please refer to Fig.6, when the composite substrate 12 is flexible, the composite substrate 12 can be bended according to battery design, the layout layer 24 and the battery unit 19 are at least partially overlapping or non-overlapping orthographically.

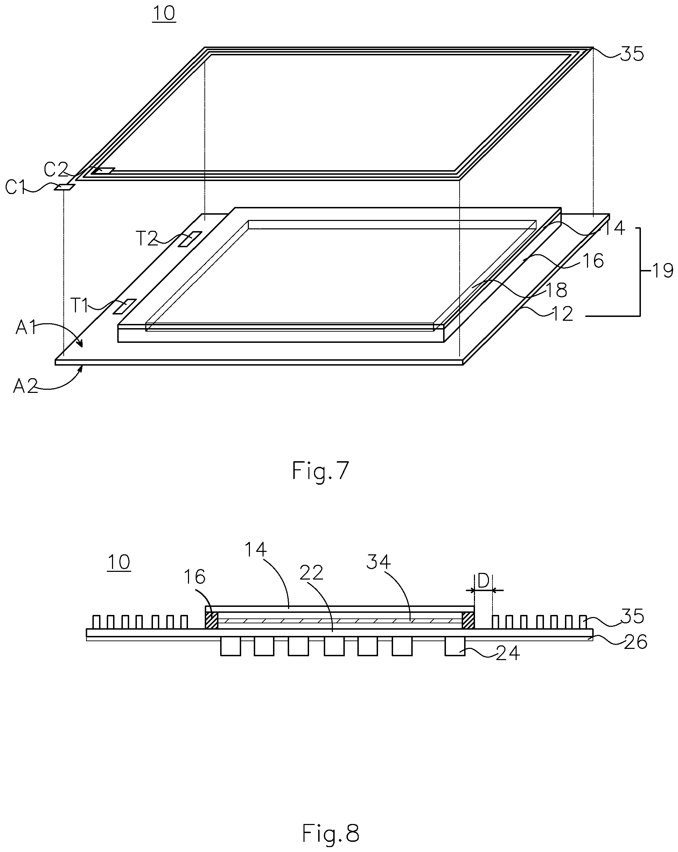

More specifically, please refer to Fig.7 and Fig.8, Fig.7 and Fig.8 illustrate the logical battery of the present invention that part of the layout layer is used as an antenna. As figure, part of the layout layer 24 is used as the antenna unit 35. Orthographically, the antenna unit 35 is disposed around the peripheral of the battery unit 19. The antenna unit 35 and the battery unit 19 are non-overlapping. The composite substrate 12 have two electric output parts T1, T2 of logical battery. The antenna unit 35 have two connecting points C1, C2, the electric output parts T1, T2 are electrically connecting with the connecting points C1, C2 via a conductive wire. For example, the conductive wire can cross-set on the antenna 35 (didn't shown in figure), to reduce the distribution of electromagnetic effect, the width of the conductive wire is not greater than 150µm. In addition, the conductive wire can be buried in the composite substrate 12, the electric output parts T1, T2 and the connecting parts C1, C2 can correspondingly be integrated into a single endpoint. The layout design of the composite substrate 12 can be simplified, the occupied area of the electric output parts and the connecting points can be decreased.

Although the antenna unit 35 and the battery unit 19 are on the same surface of the first current collecting layer 22 in above embodiment, the antenna unit 35 and the battery unit 19 can be disposed on the opposite surface of the first current collecting layer 22 in practical application.

In this embodiment, the composite substrate 12 can be single layer circuit board or double layer circuit board. The materials of the double layer circuit board are selected from Paper Phenolic substrate, Paper Epoxy copper substrate, Glass-Epoxy copper substrate, Glass Composite copper substrate, Benzene resin copper substrate or polymer/polyester copper substrate. The layout layer 24 of the composite substrate 12 forms the antenna unit 35 via layer engraving, etching, machining, sputtering, vapor deposition, coating, etc. The structure of the antenna usually can be spiral, straight, block, etc. Moreover, the insulating covering layer 26 is further disposed on the uncovered surface of the second current collecting layer 14. In this embodiment, the insulating covering layer 26 only covers the uncovered surface of current collecting layer partially, however, the insulating covering layer 26 can cover the uncovered surface of current collecting layer completely.

The electro-chemical system layer 18 is directly forming on the metal surface (e.g. surface of Copper metal layer) of the composite substrate 12. That is, the metal surface of the composite substrate 12 is used as one of a current collecting layer of the battery. The electro-chemical 18 can electrically connect to the composite substrate 12 without connecting to external connection part. The complexity of circuit designation or procession is reduced.

In practical application, the antenna unit 35 can be the sensing antenna. On the one hand, the antenna unit 35 can use Universal Asynchronous Receiver Transmitter (UART) for NFC data transmission, and the encoding is Non-Return-to-Zero (NRZ). On the other hand, the antenna unit 35 can be wireless charging antenna of electromagnetic induction, and the specifications meet the standards of A4WP (Alliance for Wireless Power) PMA (Power Matters Alliance) and WPC (Wireless Power Consortium). In addition, in response to requirements, the antenna unit 35 can be used as the functional modules of Bluetooth, WIFI, LTE, 3G, etc.

To avoid the magnetic field lines being shielded by the battery unit 19, the best distance between the antenna unit 35 with any peripheral of the battery unit 19 is not smaller than 2mm (please refer to Fig.7). In practical data, when the antenna unit 35 and the battery unit 19 are overlapping orthographically, the efficiency of wireless charging is 10% to 15% of the efficiency of wire charging, because the electromagnetic shielding effectiveness between the antenna unit 35 and the battery unit 19. When the distance between the antenna unit 35 and the battery unit 19 is smaller than 2mm orthographically, the efficiency of wireless charging is about 40% of the efficiency of wire charging. When the distance between the antenna unit 35 and the battery unit 19 is greater than 2mm orthographically, the efficiency of wireless charging is about 60% of the efficiency of wire charging. When the distance between the antenna unit 35 and the battery unit 19 is 3mm orthographically, the efficiency of wireless charging can achieve about 80% of the efficiency of wire charging. When the orthographical distance between the antenna unit 35 and the battery unit 19 is greater than 6mm, the efficiency of wireless charging can achieve about 100% of the efficiency of wire charging. Therefore, to reduce electromagnetic shielding effectiveness, the distance between the battery unit 19 and the antenna unit 35 is tend to be greater. Since the orthographical distance become greater, the area of the circuit layout would be decreased. However, with different types of demand for the products, the orthographical distance between the battery unit 19 and the antenna unit 35 is also different depending on the product.

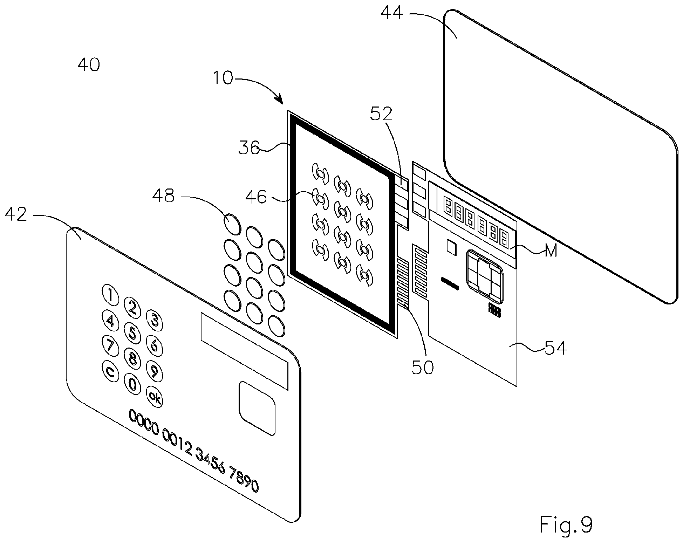

Please refer to Fig.9, Fig.9 illustrates the logical battery having antenna unit which applied in a smart card 40. The smart card 40 can generate a security code dynamically. Also, the security code can be entered in the smart card 40 for transaction confirming. For example, when entering the credit card number on the top surface 42 or the security code on the bottom surface 44, the button circuit 46 will be triggered by user, and the signal will transfer to the metal part 50. Meanwhile, the logical battery 10 is powering the mother board 54 via metal part 52. The operation result will be shown on the display M or be transmitted to receiver via the antenna unit 35. The receiver comprises the induction loop of digital board or other devices which can receive electromagnetic signals such as induction card reader or wireless charging sensor. Moreover, according to the regulation of ISO78165, two of the eight metal parts of the smart card 40 which contact with the card reader, Vpp and Vcc, can supply power to the circuit board of the smart card 40. Therefore, the battery unit 19 can be charged via Vpp and Vcc. The metal part 50, 52 are the interface of power supplying and signal outputting. The metal part is aluminum foil and can be plated on tin, indium, silver, brass, bronze or gold, to increase the ability of anti-corrosion, anti-oxidation and conduction.

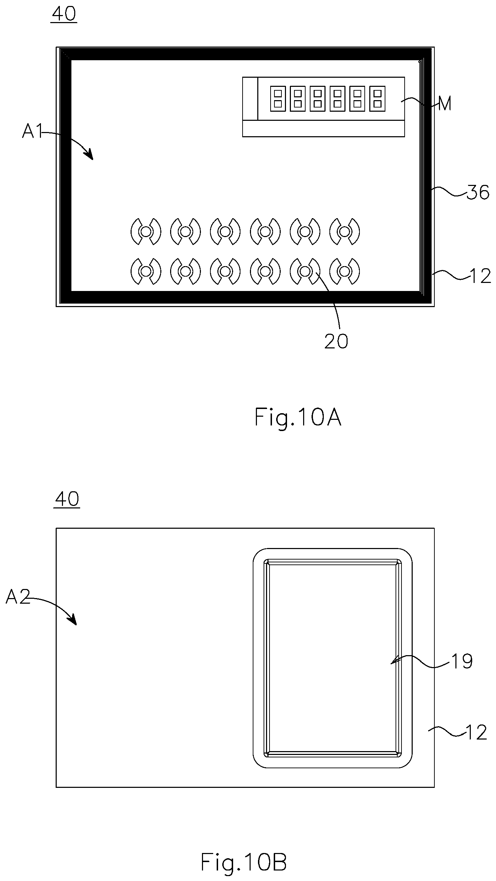

Please refer to Fig.10A to Fig.10B, Fig.10A and Fig.10B are the illustration of positive and negative surface of logical battery which applied in smart card. Different from the above embodiment, the antenna unit 35, the battery unit 19, the electronic modules 20(as the button circuit in figure) and the display M are disposed on two layout layer A1, A2 of the same composite substrate 12 via a signal line without external conductive part. The antenna unit 35 is disposed around the peripheral of the smart card 40 so that even just a part of the antenna unit 35 contact with the receiver can transmit the signal or wireless charging.

Accordingly, the present invention provides a new logical battery, the current collecting layer if battery unit and the layout layer or the antenna unit of electronic modules are integrated in to a composite substrate. The whole thickness of logical battery is decreased. Also, the restrictions of disposing electronic modules is decreased.

The invention being thus described; it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A logical battery, comprising:
a composite substrate, comprising:
a first current collecting layer; and
at least a layout layer, electrically connecting to the first current collecting layer;
a second current collecting layer;
a sealing frame, disposed between the first current collecting layer and the second current collecting layer, the sealing frame has two end surface, the first current collecting layer adheres to one of the end surface, the second current collecting layer adheres to the other end surface, and at least part of the sealing frame is overlapping with the first current collecting layer and the second current collecting layer orthographically, a sealed space is formed via the sealing frame, the first current collecting layer and the second current collecting layer; and
an electro-chemical layer, disposed in the sealed space, a battery unit is formed via the first current collecting layer, the second current collecting layer, the sealing frame and the electro-chemical layer, the orthographical area of the electro-chemical layer is smaller than at least one of the orthographical area of the first current collecting layer and the second current collecting layer, the electro-chemical layer comprises a first active material layer, a second active material layer and an isolation layer which disposed between the first active material layer and the second active material layer, the first active material layer electrically contacts with the first current collecting layer, the second active material layer electrically contacts with the second current collecting layer.

2. The logical battery of claim 1, wherein the composite substrate is further comprising an insulating material layer, partially insulating the first current collecting layer from the layout layer.

3. The logical battery of claim 1, wherein the layout layer and the electro-chemical layer are on the same surface of the composite substrate.

4. The logical battery of claim 1, wherein the layout layer and the electro-chemical layer are on the opposite surface of the composite substrate, the layout layer and the electro-chemical layer are at least partially overlapping or non-overlapping to each other.

5. The logical battery of claim 1, further comprising at least an electronic module, the electronic module is electrically connecting to the layout layer, the electronic module is selected from circuit, electronic module or a combination thereof.

6. The logical battery of claim 1, wherein the composite substrate is circuit board.

7. The logical battery of claim 1, wherein an insulation covering layer is disposed on a surface of the second current collecting layer.

8. The logical battery of claim 7, wherein a patterned metal layer is further disposed on a surface of the insulation covering layer which does not contact with the second current collecting layer for circuit layout, current collecting or a combination thereof.

9. The logical battery of claim 1, wherein the orthographical area of the first active material is smaller than the orthographical area of the first current collecting layer.

10. The logical battery of claim 1, wherein the orthographical area of the second active material is smaller than the orthographical area of the second current collecting layer.
